(19) 

**Europäisches Patentamt**
**European Patent Office**
**Office européen des brevets**

(11) **EP 1 870 882 A2**

(12) **EUROPEAN PATENT APPLICATION**

(43) Date of publication:
**26.12.2007 Bulletin 2007/52**

(51) Int Cl.:
*G11B 7/00* (2006.01)

(21) Application number: **07110576.1**

(22) Date of filing: **19.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **19.06.2006 KR 20060054820**

(71) Applicant: **LG Electronics Inc.**
**Seoul 150-721 (KR)**

(72) Inventor: **Choi, Jung Yun**
**150-721, Seoul (KR)**

(74) Representative: **Vossius & Partner**
**Siebertstrasse 4**
**81675 München (DE)**

(54) **Selective performance of optimum power control process**

(57)     A power control process in which an inner region optimum power control ("OPC") value of an inner region of an optical disc is measured at a base speed is selectively performed. A predicted outer region OPC value is calculated based upon the inner region OPC value, a reference laser power associated with the base speed and a desired maximum speed. The predicted outer region OPC value is compared with a laser power limit, and whether to measure an outer region OPC value on an outer region of the optical disc at a desired maximum speed is determined.

FIG. 4

**Description**

This application claims priority to Korean Patent Application No. 10-2006-0054820, filed on June 19, 2006 which is incorporated herein by reference.

The present disclosure generally relates to data recording, and one particular implementation relates to the selective performance of an optimum power control process in an optical disc recording device.

Optical discs, such as digital versatile disc ("DVD")-recordable ("DVD-R") or DVD rewritable ("DVD-RW") optical discs, are used for storing and reproducing high quality audio and video data. In order to determine an appropriate power level for an optical disc recording device, a power calibration area ("PCA") of the optical disc is read or analyzed, and the result of the analysis is used to determine an optimum writing power required for the data recording. This process is generally referred to as the optimum power control ("OPC") process.

In one general aspect, an inner region OPC value of an inner region of an optical disc is measured at a base speed, and a predicted outer region OPC value is calculated based upon the inner region OPC value, a reference laser power associated with the base speed and a desired maximum speed. The predicted outer region OPC value is compared with a laser power limit, and a determination is made as to whether to measure an outer region OPC value on an outer region of the optical disc at a desired maximum speed.

Implementations may include one or more additional features. For instance, the predicted outer region OPC value may be expressed as shown below in Equation (1):

$$OPC_{outer} = OPC_{inner} \times \frac{P_{desired}}{P_{base}} \qquad (1)$$

In Equation (1), $P_{base}$ represents the reference laser power associated with the base speed, $OPC_{inner}$ represents the measured inner region OPC value, $P_{desired}$ represents the reference laser power associated with the desired maximum speed, and $OPC_{outer}$ represents the predicted, outer region OPC value.

Alternatively, the predicted outer region OPC value may be expressed as shown below in Equation (2):

$$OPC_{outer} = P_{desired} - P_{base} + OPC_{inner} \qquad (2)$$

Determining whether to measure the outer region OPC value on the outer region may be based at least in part upon whether the predicted outer region OPC value exceeds the laser power limit. If so, the outer region OPC value may be measured on an outer region of the optical disc at a desired maximum speed. The predicted outer region OPC value may be stored as a stored outer region OPC value if the predicted outer region OPC value does not exceed the laser power limit.

The measured outer region OPC value may be compared with the laser power limit and stored as the stored outer region OPC value when the predicted outer region OPC value exceeds the laser power limit and the measured outer region OPC value does not exceed the laser power limit. The laser power limit may be stored as the stored outer region OPC value if the measured outer region OPC value exceeds the laser power limit. If the laser power limit is stored as the stored outer region OPC value, a new maximum speed may be calculated based upon the base speed, the inner region OPC value, and the reference laser power associated with the base speed, with the new maximum speed being faster than the base speed and slower than the desired maximum speed. If the laser power limit is stored as the stored outer region OPC value, data may be recorded on the optical disc in a constant angular velocity ("CAV") mode between the base speed and the new maximum speed at a conversion radius and in a constant linear velocity ("CLV") mode at the new maximum speed.

The conversion radius $R_{convo}$ may be expressed as shown below in Equation (3):

$$R_{convo} = R_{outer} \times \frac{S_{calc}}{S_{ref}} \qquad (3)$$

In Equation (3), $R_{outer}$ represents the outer radius, $R_{convo}$ represents the conversion radius, $S_{ref}$ represents the reference maximum recording speed, and $S_{cale}$ represents the calculated maximum recording speed. Data may be recorded on the optical disc in a CAV mode between the base speed and the desired maximum speed if the predicted outer region C7PC value does not exceed the laser power limit or the measured outer region OPC value does not exceed the laser power limit. A laser power limit and a table may be stored, with the table including optical disc speeds and associated reference laser powers. For example, the base speed may be 4x, and the desired maximum speed may be 16x.

In another general implementation, an apparatus includes a measuring device configured to measure an inner region OPC value of an inner region of an optical disc at a base speed. The apparatus also includes a processing device configured to calculate a predicted outer region OPC value based upon the inner region OPC value, a reference laser power associated with the base speed and a desired maximum speed, to compare the predicted outer region OPC value with a laser power limit, and to determine whether to measure an outer region OPC value on an outer region of the optical disc at a desired maximum speed.

Other features will be apparent from the following description, including the drawings and the claims.

BRIEF DESCRIPTION OF THE DRAWINGS

FIGS. 1A to I C and 2A to 2B are block diagrams and line graphs which illustrate exemplary data recording processes.

FIG. 3 is a block diagram illustrating an exemplary optical disc recording device.

FIGS. 4 and 5 are flowcharts illustrating exemplary data recording methods.

FIGS. 6A to 6C and 7A to 7C are additional block diagrams and line graphs which illustrate exemplary data recording processes.

FIG. 8 is a flowchart illustrating an exemplary data recording method.

Like reference numbers represent corresponding parts throughout.

DETAILED DESCRIPTION

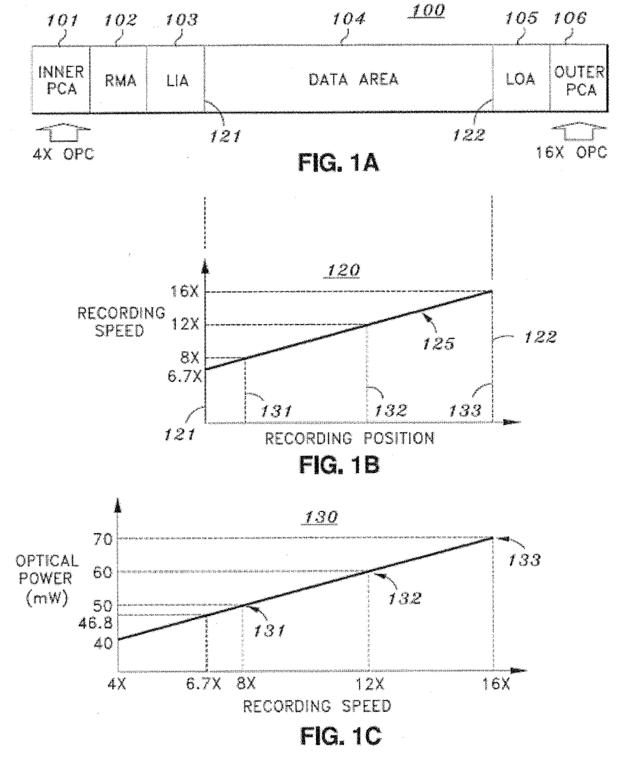

FIGS. 1A to 1C illustrate an exemplary data recording process, in which the requested recording speed is 16x. In particular, FIG. 1A is a block diagram of an optical disc 100, where the leftmost region corresponds to the inner circumference of optical disc 100, and the rightmost region corresponds to the outer circumference of the optical disc 100. The optical disc 100 includes an inner PCA 101, a recording management area ("RMA") 102, a lead in area ("LIA") 103, a data area 104, a lead out area ("LOA") 105, and an outer PCA 106.

FIG. 1B is a line graph 120 charting recording speed versus recording position, for recording within data area 104 of optical disc 100. The leftmost portion of the line graph 120 chart is aligned with the inner circumference 121 of data area 104, and the rightmost portion of the line graph 120 is aligned with the outer circumference 122 of data area 104.

FIG. 1C is a line graph 130 charting optical power versus recording speed, where the line graph 130 is aligned with the line graph 120. For example, the recording position associated with reference 131 corresponds to a recording speed of 8x in both line graph 120 and line graph 130. Similarly, the recording positions at references 132 and 133 correspond to recording speeds of 12x and 16x, respectively, in both line graph 120 and line graph 130.

In one example, a requested recording speed is 4x. The rate at which an optical disc recording device transfers data from the optical disc is gauged by a speed factor relative to a music compact disc ("CD"), or 1 x, corresponding to a data transfer rate of 150 kilobytes per second in a common data format. A recording speed of 4x, for example, corresponds to four times the speed of a 1 x recording device, or 600 kilobytes per second. With the 4x recording speed, the optical disc recording device accesses the inner PCA 101 and detects an optical power value for the 4x recording speed by performing the OPC process at the 4x recording speed.

If the requested recording speed is 16x, the optical disc recording device detects inner and outer optical power values for the inner and outer PCA 101 and 105 of the optical disc. Specifically, the OPC process is performed in the inner PCA 101 for the 4x recording speed, and the optical disc recording device performs the OPC process in the outer PCA 106 at the 16x recording speed.

The optical disc recording device calculates the optical power values for the recording speeds by using the 4x optical power value and the 16x optical power value detected through the OPC process in the inner PCA 101 and the outer PCA 106, and the data recording process is carried out by applying the calculated optical power values. Since the radius of the inner circumference 121 and outer circumference 122 of the data area differs by a factor of about 2.4, when the optical disc rotates at a CAV, the linear velocity or recording speed in the outer circumference 122 is approximately 2.4 times faster than the linear velocity in the inner circumference.

A maximum recording speed of the optical disc recording device may be determined by a variety of methods, such as by determining a rotation speed of a spindle motor, a transfer function of an actuator, an output power of a laser diode, or the maximum recording speed corresponding to the recording speed in the outer circumference 122. In optical disc recording devices, the maximum recording speed in the inner circumference 121 is about $1_{/2.4}$ times the maximum recording speed of the optical disc recording device, such as the maximum recording speed at the outer circumference 122. For instance, when the maximum recording speed of the device is 16x, the maximum recording speed in the inner circumference is $^{16x}/_{2.4}$, or 6.7x.

If data is recorded on the optical disc in the direction from the inner circumference 121 to the outer circumference 122 of the data area while the optical disc rotates with a CAV, the data recording speed gradually increases from 6.7x to 16x according to the optical power values calculated for the recording speeds. For instance, and as shown in line graphs 120 and 130, the optical power value may be adjusted to 46.8mW at 6.7x (at the inner circumference 121), 50mW at 8x (at reference 131), 60mW at 12x (at reference 132), and 70mW at 16x (at the outer circumference 122).

The optical power value expended while writing data varies depending on various factors. In general, as the recording speed and the ambient temperature increase, optical power requirements increase as well. Accordingly, as the recording speed and ambient temperature increase, it is possible that the optical power required to write data may exceed the maximum available power of the laser.

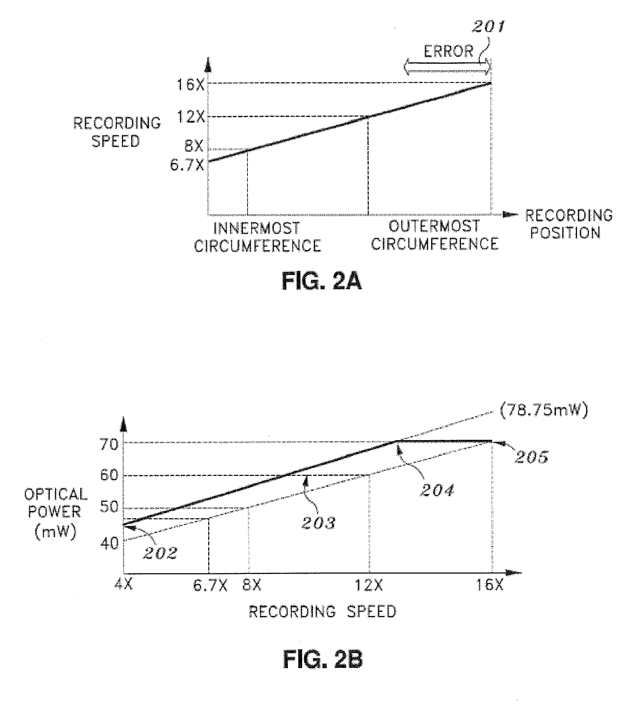

FIGS. 2A and 2B illustrate line graphs in which the optical power requirements are increased due to an increase in ambient temperature. As shown in FIG. 2B, the optical power required at reference 202, corresponding to 4x, is higher than the optical power at the same speed of the line graph 130 in FIG. 1C, and the optical powers at 6,7x, 8x, and 12x are also increased. The representative power curve 203 increase until reference 204, where the optical power reaches the maximum available optical power of 70mW. Consequently, since the maximum power output is reached prior to reaching 16x at reference 204, recording errors may occur in the data areas corresponding to error region 201 (as shown in FIG 2A).

If it is determined that the optical power for the requested recording speed is insufficient, the optical disc recording device may lower the recording speed. The optical disc recording device also measures the ambient temperature and uses the measured ambient temperature as a basis for lowering the recording speed. In particular, when the measured ambient temperature is above a certain value, the recording speed may be lowered. In order to determine appropriate power levels for an optical disc recording device, the PCA of the optical disc may be read or analyzed using the OPC process.

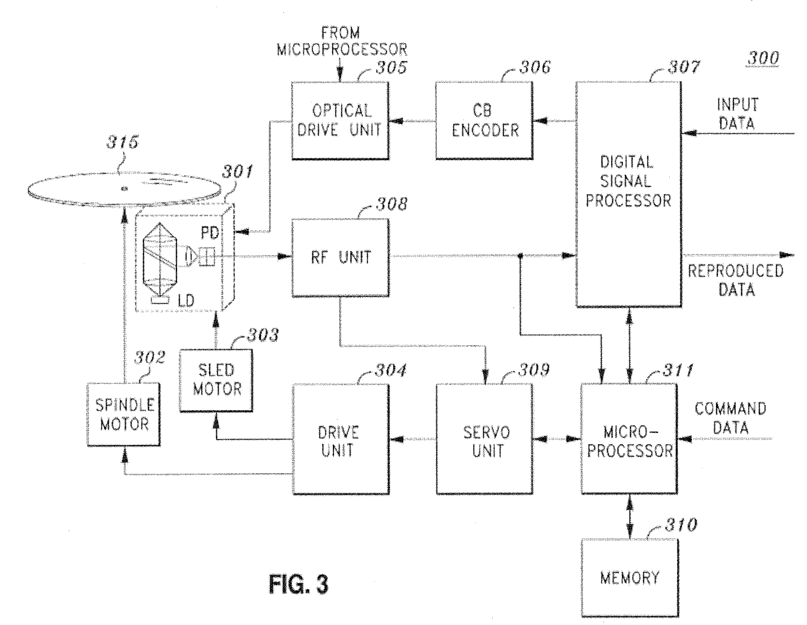

FIG. 3 is a block diagram illustrating an exemplary optical disc recording device 300, which includes an optical pickup 301, a spindle motor 302, a sled motor 303, a drive unit 304, an optical drive unit 305, a channel bit ("CB") encoder 306, a digital signal processor ("DSP") 307, a radio-frequency ("RF") unit 308, a servo unit 309, a memory 310, and a microprocessor 311. The memory 310 is a nonvolatile memory such as an EEPROM, a flash memory, or another type of memory, and includes information relating to a reference laser power value suitable for various recording speeds and a maximum laser power that is produced from a laser diode included in the optical pickup 301.

When conducting the data recording process, the microprocessor 311 accesses an inner area, such as, for example, the inner PCA of the optical disc 315, and performs an OPC process at a recording speed. The OPC process enables the detection of an optical power value suitable for the recording speed. The power value is set by controlling the servo unit 309 and the optical drive unit 305.

The microprocessor 311 predicts an optical power value suitable for the recording speed by comparing the detected optical power value and the reference optical power value managed in the memory 310. Specifically, the microprocessor 311 predicts the optical power value without executing the OPC process on the outer PCA. The microprocessor 311 may selectively perform the OPC process in the outer PCA according to whether the predicted optical power value is supported by the optical disc recording device.

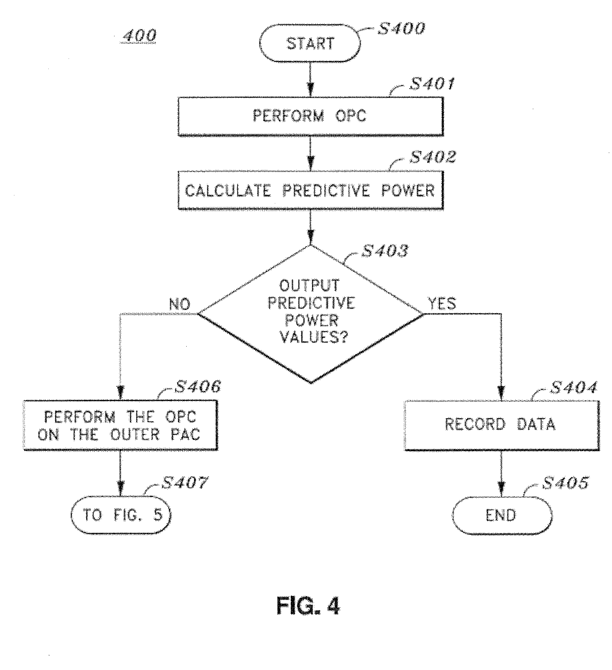

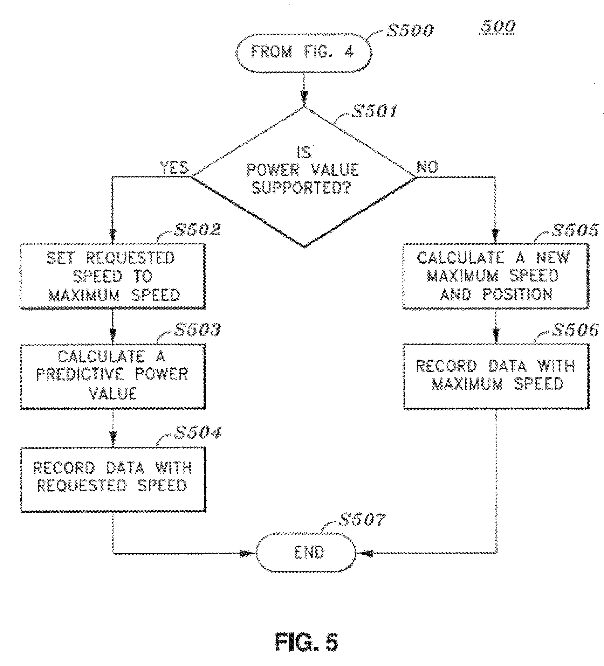

FIGS. 4 and 5 are flowcharts illustrating exemplary data recording methods for an optical disc recording device. When method 400 begins (S400), an OPC is performed at a base speed (S401). Although, in this example, the base speed is described as 4x and the maximum speed is described as 16x, other speeds may also be used.

In one example, the microprocessor 311 accesses the inner PCA of the optical disc 315 and performs the OPC process at a recording speed of 4x. The OPC process detects the optical power value suitable for 4x by controlling the servo unit 309 and the optical drive unit 305. The microprocessor 311 calculates a predictive optical power value suitable for a requested recording speed (S402). The calculation may include expressions incorporating measured and reference values using a proportional relationship, an offset relationship, or another relationship. Notably, the predictive optimum power value may be calculated by various mathematical relationships which include a, measured optimum power value.

In another example, the predictive optical power value is calculated with a proportional expression using the detected optical power value, the reference optical power value of the certain recording speed managed in the memory 310, and a reference optical power value managed in the memory 310. Specifically, with the reference optical power value of the requested recording speed, the predictive optical power value for respective recording speeds is calculated using the proportional expression.

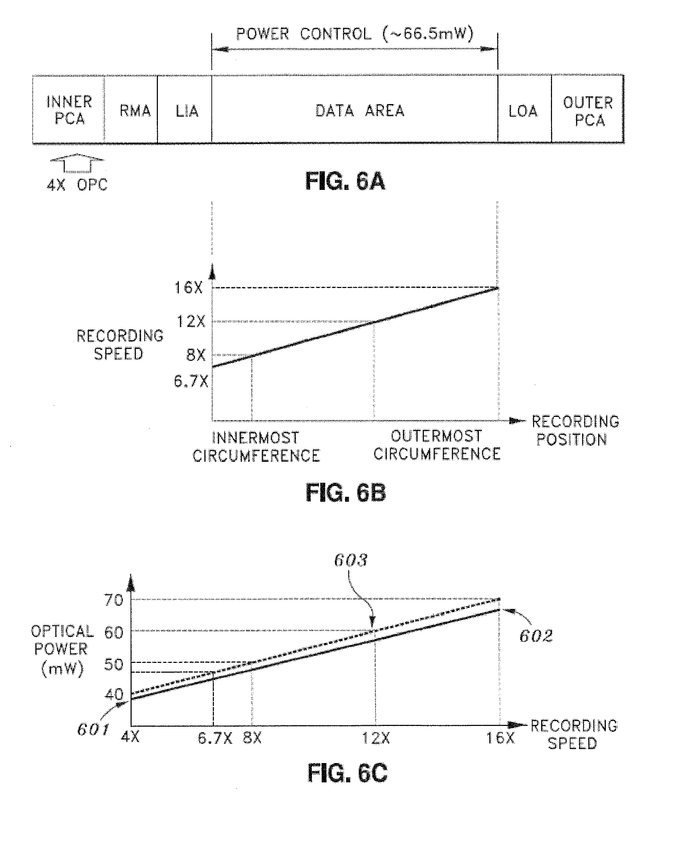

The measured optical power value suitable for 4x may be lower than a reference optical power value. For example, in FIGS. 6A to 6C, the optical power value is measured at 38mW at reference 601, which is 2mW lower than the 40mW 4x reference optical power value managed in the memory 310.

Equation (1), below, is used to calculate the predicted outer region optimum power value:

$$OPC_{outer} = OPC_{inner} \times \frac{P_{desired}}{P_{base}} \qquad (1)$$

In Equation (1), Phase represents the reference laser power associated with the base speed, $OPC_{inner}$ represents the measured inner region optimum power value, $P_{desired}$ represents the reference laser power associated with the desired maximum speed, and $OPC_{outer}$ represents the predicted outer region optimum power value. For example, when the 4x reference optical power value and the measured optical power value are 40mW and 38mW, respectively, and a reference optical power value for an associated requested speed of 16x is 70mW, the microprocessor 31 calculates the predictive optical power value ($OPC_{outer}$) for 16x at 66.5mW.

Checking the maximum optical power value managed in the memory 310, the microprocessor 311 determines whether the predictive optical power value is supportable by the laser diode (S403). For instance, when the 16x predicted outer region optimum power value is 66.5mW and the checked maximum optical power value is 70mW, the microprocessor 311 determines that the calculated predictive optical power value may be output.

In the case where the calculated predictive optical power value may be output, the microprocessor 311 then performs the optical power control process to execute the data recording process at 16x by controlling the servo unit 309 and the optical drive unit 305 (S404), followed by the end (S405) of the method 400. The data is recorded on the data area of the optical disc 315 in the direction from the inner circumference to the outer circumference while the optical disc 315 rotates at a CAV corresponding to 16x.

As the data recording proceeds from the inner circumference to the outer circumference, the recording speed gradually increases from 6.7x to 16x. The optical power value applied to the data recording gradually increases in proportion to the increasing recording speed based on the predictive optical power values for the recording speeds calculated (S402).

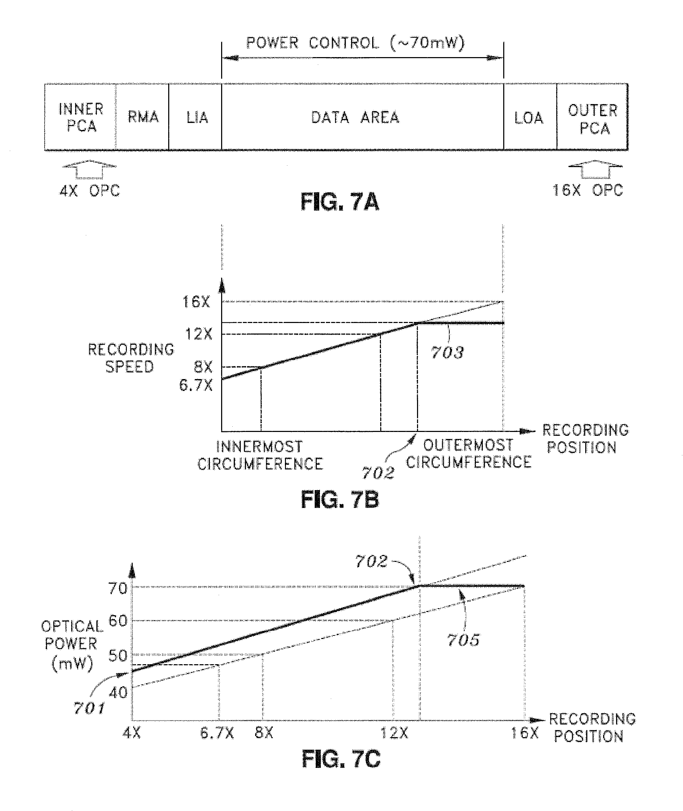

As the temperature in the optical disc recording device increases, the measured optical power value for 4x may be detected as higher than the speed reference optical power value managed in the memory 311. For example, in FIGS. 7A to 7C, the optical power value measured through the OPC process conducted on the inner PCA at reference 701 is 45mW (S401). This measured optical power value is 5mW higher than the 40mW 4x reference optical power value managed in the memory 311. In the case where the 4x reference optical power value and the measured optical power value are 40mW and 45mW, respectively, and the 16x requested speed reference optical power value is 70mW, a predictive optical power value for 16x is calculated at 78.7mW using the proportional relationship (S402).

Other elements may have an insignificant effect on the slope of the recording speed and the optical power. As such, the predictive optical power value for a higher speed may be calculated by adding the difference between the reference or predicted optimum power value at the lower speed to the predicted or reference value at the higher speed. As such, the predictive optimum power value for 16x may be calculated by use of a second exemplary equation employing an offset function represented with a constant slope. In particular, the relationship between the reference optical power value managed in the memory 310 and the detected optical power values for various recording speeds may be a constant variance, and Equation (2) may be used to calculate the predicted optimum power value:

$$OPC_{outer} = P_{desired} - P_{base} + OPC_{inner} \qquad (2)$$

In Equation (2), $P_{base}$ represents the reference laser power associated with the base speed, $OPC_{inner}$ represents the measured inner region optimum power value, $P_{desired}$ represents the reference laser power associated with the desired maximum speed, and $OPC_{outer}$ represents the predicted outer region optimum power value.

In the above example, the 4x reference optical power value and the measured optical power value are 40mW and 45mW, respectively, and the 16x requested speed reference optical power value is 70mW. The predicted optimum power value at the 16x requested speed may be calculated at 75mW by adding the reference optical power value of 70mW and 5mW, where 5mW is the difference between the measured optical power value and the reference optical power value at 4x.

The microprocessor 311 may determine whether the predictive optical power value is supported by the laser diode by checking the maximum optical power value managed by the memory 310 (S403). For instance, when the 16x predictive optical power value is 78.75mW and the checked maximum optical power value is 70mW, the microprocessor 311 determines that the predictive optical power value is not supported. If the microprocessor 311 determines that the predictive optical power value is not supported by the optical disk device, the microprocessor 311 may access the outer PCA and detect the measured optical power value by performing the OPC process at the requested speed (e.g. at 16x) (S406).

Referring to FIG. 5, the microprocessor 311 determines whether the result of an OPC process at an outer PCA at the requested speed is a supported power value (S501). Specifically, in the example above, the microprocessor 311 determines whether the power value from the OPC process at the outer PCA is above the maximum power value of 70mW.

If the determined power level is supported, the microprocessor 311 associates the requested 16x with a maximum available recording speed (S502). The microprocessor 311 may recalculate the predictive optical power value for various respective recording speeds using the measured optical power values of 4x and 16x (S503). The recalculated power values may be stored for future use as reference or predictive optical power values.

The microprocessor 311 performs the OPC process to carry out data recording at 16x by controlling the servo unit 309 and the optical drive unit 305 (S504), followed by the end (S507) of the method 500. The data may be recorded on the data area of the optical disc 315 in the direction from the inner circumference to the outer circumference while the optical disc 315 rotates with the CAV corresponding to 16x.

As the data recording proceeds from the inner circumference to the outer circumference, the recording speed gradually increases from 6.7 to 16x, The recalculated optical power values are applied to the data recording. Specifically, the optical power value gradually increases in proportion to the increasing recording speed based on the recalculated predictive optical power values (S503).

If the determined power level is not supported, the microprocessor 311 lowers the recording speed to below 16x so that the lowered speed corresponds to a supported power level. In order to determine a new maximum supported recording speed and the corresponding optical power value (S505), the microprocessor 311 sets the maximum optical power value as the measured optical power value. Specifically, in the example above, the measured optical power value is set to the maximum supported value of 70mW. The set measured optical power value and the detected 4x measured optical power value are used to calculate the new maximum supported speed. The calculation may employ the proportional or offset relationship as discussed above.

In one example, the microprocessor 311 employs Equation (1) to determine a reference optical power value P from the maximum supportable power value which is set as the measured optical power value. In particular, in Equation (1) the reference optical power value P is based on the proportional expression $40_{/45} = {}^P/_{70}$. Equation (4) is used to calculate the recording speed corresponding to the acquired reference optical power value:

$$P = \frac{(P_{desired} - P_{base})}{OPC_{outer} - OPC_{inner}} * (X - 4) + P_{base} \qquad (4)$$

In Equation (4), P is the reference optical power value, $X$ is the recording speed, $P_{base}$ represents the reference laser power associated with the base speed, $OPC_{inner}$ represents the measured inner region optimum power value, $P_{desired}$ represents the reference laser power associated with the desired maximum speed, and $OPC_{outer}$ represents the predicted outer region optimum power value. Therefore, in the above example, 62.2 is equivalent to 2.5 * X + 30, and the maximum recording speed X is 12.9, corresponding to about a 13x recording speed. The 13 x recording speed corresponds to the maximum speed and the equivalent recording position 702 in FIG 7.

When the maximum optical power value of 70mW is set to the measured optical power value, the corresponding recording speed may be acquired using various other calculations. For example, Equation (5) is used by the microprocessor 311 to employ a second linear function:

$$P = \frac{(P_{desired} - P_{base})}{OPC_{outer} - OPC_{inner}} * (X - 4) + OPC_{inner} \qquad (5)$$

In Equation (5), P is the reference optical power value, $X$ is the recording speed, $P_{base}$ represents the reference laser power associated with the base speed, $OPC_{inner}$ represents the measured inner region optimum power value, $P_{desired}$ represents the reference laser power associated with the desired maximum speed, and $OPC_{outer}$ represents the predicted outer region optimum power value. Equation (5) is a linear function between the recording speed and the predictive (or measured) optical power value using the first linear function of $P = 2.5 * X + 30$ and the detected 4x measured optical power value. When the reference optical power value is 70mW, the maximum recording speed is 14x,

When the recording speed corresponding to the maximum optical power value is lowered, the microprocessor 311 carries out the data recording on the optical disc 305 (S506), followed by the end (S507) of the method 500. The data recording is carried out by applying the predictive optical power values for the calculated recording speeds (S403) and the acquired maximum recording speed (S505), as shown in FIGS. 6A to 6C.

Data recording is carried out on the optical disc in the direction from the inner circumference to the outer circumference. The optical disc may be rotated at the maximum recording speed, or the calculated recording speed on the outer circumference (S505), such as where the optical disc is rotated with the angular velocity corresponding to the 13x. The recording speed throughout the inner circumference and the outer circumference is reduced according to the reduction of the calculated maximum recording speed, as shown by start and end points 601 and 602 of FIG. 6, which are positioned below the predictive optical power curve 603. The optical power value is adjusted appropriately with the recording speed. Specifically, the data recording commences at a recording speed of about $1_{/2.4}$ of the calculated maximum recording speed, on the inner circumference. At the outer circumference, the data is recorded at the maximum recording speed.

In other implementations, the data recording may be executed in the direction from the inner circumference to the outer circumference of the optical disc, while rotating the optical disc at the angular velocity corresponding to the requested speed or the maximum speed allowed by the device. In order to avoid errors due to insufficient power, the angular velocity may be reduced to achieve a CLV while rotating the optical disc. The reduction may be such that the maximum recording speed is maintained from the position corresponding to the maximum recording speed 703. Equation (3) may be used to calculate the position, $R_{convo}$ 702, corresponding to the maximum recording speed:

$$R_{convo} = R_{outer} \times \frac{S_{calc}}{S_{ref}} \tag{3}$$

In Equation (3), $R_{outer}$ represents the outer circumference, $R_{convo}$ represents the conversion radius, $S_{ref}$ represents the reference maximum recording speed, and $S_{cale}$ represents the calculated maximum recording speed. Equation (3) may be used to calculate the conversion radius, where $R_{convo}$ is based on the outer circumference radius, $S_{ref}$ is based on the maximum recording speed allowed by the device on the outer circumference, and $S_{cale}$ is based on the maximum calculated recording speed (S406). The position corresponding to the maximum recording speed 702 may be calculated together with the maximum recording speed (S505).

As shown in FIGS. 6A to 6C, the optical disc is recorded rotating with a CAV in the direction from the inner circumference to the outer circumference. Such a recording may include a trade off between a decreased load on the spindle servo of the optical disc and an increase in recording time.

As shown in FIGS. 7A to 7C, the optical disc is recorded in a CAV mode, such as at position 701, and a CLV mode, such as at position 705, as data recording proceeds from the inner circumference to the outer circumference. This recording technique may include a trade off between an increased load on the spindle servo as the rotation of the optical disc is changed from a CAV to a CLV, and a decrease in recording time.

In the above example, the microprocessor 311 writes the data while rotating the optical disc 305 with a CAV corresponding to the 16x requested speed. The data is written from the inner circumference up to the calculated position $R_{convo}$ by controlling the servo unit 309 and the optical drive unit 305. The recording speed increases from the 6.7x to the calculated maximum recording speed 13x. As the CAV mode recording speed increases with the radius, the optical power gradually increases in proportion to the increasing recording speed. The optical power value is based on the predictive optical power values for the recording speeds (S402).

After reaching the maximum recording speed, the microprocessor shifts recording from a CAV to a CLV mode. In particular, as the microprocessor 311 writes the data while rotating the optical disc 305 in a CLV mode, the maximum recording speed is maintained at the value calculated at step S505. The recording speed is kept at maximum from the calculated position $R_{convo}$ to the outer circumference by controlling the servo unit 309 and the optical drive unit 305. By operating in a CLV mode, the predictive optical power value for the calculated maximum recording speed is sustained.

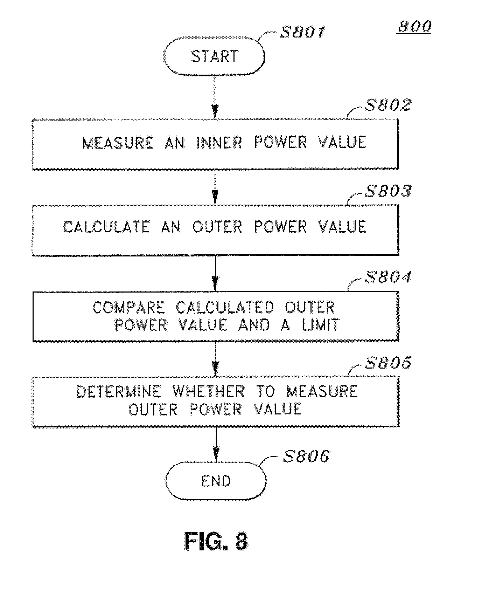

FIG. 8 is a flowchart illustrating an exemplary data recording process 800. The process begins (8801), and an inner power value is measured (S802). The measurement may be a measurement of an inner region OPC value of an inner region of an optical disc at a base speed. An outer power value is also calculated (S803) by calculating a predicted outer region OPC value based upon the inner region OPC value, a reference laser power associated with the base speed and a desired maximum speed. The outer power value may be calculated using, for example. Equations (1) or (2).

The predicted or calculated outer power value is compared to a laser power limit (S804), a determination is made as to whether to measure an outer power value (S805), and the process ends (S806). Using process 800, data recording errors on the outer circumference of the optical disc may be prevented while recording speed is improved by omitting the optimum power calculation in the outer circumference of the optical disc.

A number of implementations have been described. Nevertheless, it will be understood that various modifications may be made without departing from the spirit and scope of the claims. Accordingly, other implementations are within the scope of the following claims.

**Claims**

1. A method comprising:

    measuring an inner region optimum power control ("OPC") value of an inner region of an optical disc at a base speed;
    calculating a predicted outer region OPC value based upon the inner region OPC value, a reference laser power associated with the base speed and a desired maximum speed;
    comparing the predicted outer region OPC value with a laser power limit; and
    determining whether to measure an outer region OPC value on an outer region of the optical disc at the desired maximum speed.

2. The method of claim 1 wherein the predicted outer region OPC value is expressed as:

$$OPC_{outer} = OPC_{inner} \times \frac{P_{desired}}{P_{base}}$$

    wherein $P_{base}$ represents the reference laser power associated with the base speed, $OPC_{inner}$ represents the measured inner region OPC value, $P_{desired}$ represents the reference laser power associated with the desired maximum speed, and $OPC_{outer}$ represents the predicted outer region OPC value.

3. The method of claim 1 wherein the predicted outer region OPC value is expressed as:

$$OPC_{outer} = P_{desired} - P_{base} + OPC_{inner}$$

    wherein $P_{base}$ represents the reference laser power associated with the base speed, $OPC_{inner}$ represents the measured inner region OPC value, $P_{desired}$ represents the reference laser power associated with the desired maximum speed, and $OPC_{outer}$ represents the predicted outer region OPC value.

4. The method of any of claims 1 to 3 wherein determining whether to measure the outer region OPC value on the outer region is based at least in part upon the predicted outer region OPC value exceeding the laser power limit.

5. The method of any of claims 1 to 4 further comprising measuring the outer region OPC value on an outer region of the optical disc at a desired maximum speed.

6. The method of any of claims 1 to 5 further comprising:

    storing the predicted outer region OPC value as a stored outer region OPC value based upon whether the predicted outer region OPC value exceeds the laser power limit.

7. The method of any of claims 1 to 6 further comprising:

    comparing the outer region OPC value with the laser power limit and storing the measured outer region OPC value as the stored outer region OPC value based upon whether the predicted outer region OPC value exceeds the laser power limit and the outer region OPC value does not exceed the laser power limit; and
    storing the laser power limit as the stored outer region OPC value based upon whether the outer region OPC value exceeds the laser power limit.

8. The method of claim 7 further comprising:

calculating a new maximum speed based upon the base speed, the inner region OPC value, and the reference laser power associated with the base speed, with the new maximum speed being faster than the base speed and slower than the desired maximum speed based upon whether the laser power limit is stored as the stored outer region OPC value.

9. The method of claim 8 further comprising:

recording data on the optical disc in a constant angular velocity mode between the base speed and the new maximum speed at a conversion radius and in a constant linear velocity mode at the new maximum speed based upon whether the laser power limit is stored as the stored outer region OPC value.

10. The method of claim 8 wherein the conversion radius is expressed as:

$$R_{convo} = R_{outer} \times \frac{S_{calc}}{S_{ref}}$$

wherein $R_{outer}$ represents the outer radius, $R_{convo}$ represents the conversion radius, $S_{ref}$ represents the reference maximum recording speed, and $S_{cale}$ represents the calculated maximum, recording speed.

11. The method of claim 7 further comprising:

recording data on the optical disc in a constant angular velocity mode between the base speed and the desired maximum speed based upon whether the predicted outer region OPC value exceeds the laser power limit or the outer region OPC value exceeds the laser power limit.

12. The method of any of claims 1 to 11 further comprising storing a laser power limit and a table, the table including optical disc speeds and associated reference laser powers.

13. The method of any of claims 1 to 12 wherein the base speed is a 4x, and the desired maximum speed is a 16x.

14. An apparatus comprising:

a measuring device configured to measure an inner region optimum power control ("OPC") value of an inner region of an optical disc at a base speed; and
a processing device configured to:

calculate a predicted outer region OPC value based upon the inner region OPC value, a reference laser power associated with the base speed and a desired maximum speed,
compare the predicted outer region OPC value with a laser power limit, and
determine whether to measure an outer region OPC value on an outer region of the optical disc at a desired maximum speed.

15. The apparatus of claim 14, wherein the processing device is further configured to determine whether to measure the outer region OPC value on the outer region based at least in part upon the predicted outer region OPC value exceeding the laser power limit.

16. The apparatus of claim 14 or 15 wherein the processing device is further configured to measure the outer region OPC value on an outer region of the optical disc at a desired maximum speed.

17. The apparatus of any of claims 14 to 16, wherein the processing device is further configured to store the predicted outer region OPC value as a stored outer region OPC value based upon whether the predicted outer region OPC value exceeds the laser power limit.

18. The apparatus of any of claims 14 to 17, wherein the processing device is further configured to:

compare the outer region OPC value with the laser power limit and store the measured outer region OPC value as the stored outer region OPC value based upon whether the predicted outer region OPC value exceeds the laser power limit and the outer region OPC value does not exceed the laser power limit; and

store the laser power limit as the stored outer region OPC value based upon whether the outer region OPC value exceeds the laser power limit.

19. The apparatus of claim 18, wherein the processing device is further configured to calculate a new maximum speed based upon the base speed, the inner region OPC value, and the reference laser power associated with the base speed, the new maximum speed being faster than the base speed and slower than the desired maximum speed based upon whether the laser power limit is stored as the stored outer region OPC value.

20. The apparatus of claim 19, wherein the processing device is configured to record data on the optical disc in a constant angular velocity mode between the base speed and the new maximum speed at a conversion radius and in a constant linear velocity mode at the new maximum speed based upon whether the laser power limit is stored as the stored outer region OPC value.

21. The apparatus of claim 18, wherein the processing device is configured to record data on the optical disc in a constant angular velocity mode between the base speed and the desired maximum speed based upon whether the predicted outer region OPC value does not exceed the laser power limit or the outer region OPC value does not exceed the laser power limit.

FIG. 1A

FIG. 1B

FIG. 1C

**FIG. 2A**

**FIG. 2B**

FIG. 3

*400*

START — *S400*

↓

PERFORM OPC — *S401*

↓

CALCULATE PREDICTIVE POWER — *S402*

↓

OUTPUT PREDICTIVE POWER VALUES? — *S403*

NO → PERFORM THE OPC ON THE OUTER PAC — *S406*

↓

TO FIG. 5 — *S407*

YES → RECORD DATA — *S404*

↓

END — *S405*

**FIG. 4**

**FIG. 5**

POWER CONTROL (~66.5mW)

| INNER PCA | RMA | LIA | DATA AREA | LOA | OUTER PCA |

4X OPC

**FIG. 6A**

RECORDING SPEED

16X
12X
8X
6.7X

INNERMOST CIRCUMFERENCE        OUTERMOST CIRCUMFERENCE        RECORDING POSITION

**FIG. 6B**

603

OPTICAL POWER (mW)

70
60
50
40

602

601    4X      6.7X 8X              12X                16X    RECORDING SPEED

**FIG. 6C**

POWER CONTROL (~70mW)

| INNER PCA | RMA | LIA | DATA AREA | LOA | OUTER PCA |

4X OPC

16X OPC

**FIG. 7A**

RECORDING SPEED

16X
12X
8X
6.7X

*703*

INNERMOST CIRCUMFERENCE

*702*

OUTERMOST CIRCUMFERENCE

RECORDING POSITION

**FIG. 7B**

*702*

OPTICAL POWER (mW)

70
60
50
40

*701*

*705*

4X      6.7X  8X              12X              16X

RECORDING POSITION

**FIG. 7C**

*S801*       *800*

START

*S802*

MEASURE AN INNER POWER VALUE

*S803*

CALCULATE AN OUTER POWER VALUE

*S804*

COMPARE CALCULATED OUTER
POWER VALUE AND A LIMIT

*S805*

DETERMINE WHETHER TO MEASURE
OUTER POWER VALUE

*S806*

END

**FIG. 8**

**EP 1 870 882 A2**

## REFERENCES CITED IN THE DESCRIPTION

### Patent documents cited in the description

- KR 1020060054820